# EUROPÄISCHE PATENTSCHRIFT

(11) **EP 2 080 001 B1**
(45) Veröffentlichungstag und Bekanntmachung des Hinweises auf die Patenterteilung: **06.12.2017**
(21) Anmeldenummer: 07821095.2
(22) Anmeldetag: 09.10.2007
(51) Int. Cl.: G01L 19/04

(54) **DRUCKMESSGERÄT**
PRESSURE GAUGE
MANOMÈTRE

(30) Priorität: 20.10.2006 DE 102006050451
(43) Veröffentlichungstag der Anmeldung: 22.07.2009
(73) Patentinhaber: Endress + Hauser GmbH + Co. KG, 79689 Maulburg (DE)
(72) Erfinder: DANNHAUER, Wolfgang, 06792 Sandersdorf (DE); PHILIPPS, Michael, 79539 Lörrach (DE)
(74) Vertreter: Andres, Angelika Maria
(86) Internationale Anmeldenummer: PCT/EP2007/060727
(87) Internationale Veröffentlichungsnummer: WO 2008/046769

(56) Entgegenhaltungen:
- WO-A-92/16886
- WO-A-03/034015
- US-A- 5 394 345
- US-A1- 2005 000 290

## Beschreibung

Die Erfindung betrifft ein Druckmessgerät zur Messung und/oder Überwachung des Drucks eines Messmediums mit einem Sensorgehäuse und einem Transmitter, wobei in dem Sensorgehäuse eine Druckmesszelle mit einem drucksensitiven Messelement angeordnet ist, wobei der Druckmesszelle zumindest ein Temperaturfühler zugeordnet ist, und wobei dem Transmitter eine Regel-/Auswerteelektronik zugeordnet ist.

Bekannte Druckmessgeräte ermitteln den Druck eines Messmediums in einem Behälter entweder mittels einer kapazitiven oder einer piezoresistiven Druckmesszelle mit einer entsprechend ausgelegten Messbrücke bzw. mit einem entsprechend ausgelegten Meßelement, die/das üblicherweise integraler Teil eines Chips' ist. Bei beiden Ausgestaltungen ist das den Druck repräsentierende Messsignal auch von der Temperatur abhängig. Um den Temperatureinfluss auf den Messwert zu eliminieren und um so eine angestrebte hohe Messgenauigkeit zu erreichen, ist es erforderlich, die Störgröße 'Temperatur' in geeigneter Weise zu kompensieren.

Aus dem Stand der Technik bekannte Lösungen schlagen vor, den Störeffekt 'Temperatur' entweder analog über eine entsprechende Kompensationsschaltung oder digital über eine Kennlinienprüfung bei verschiedenen ausgewählten Temperaturstufen im Arbeitsbereich des Druckmessgeräts zu kompensieren. Eine analoge Kompensationsschaltung ist beispielsweise in der DE 35 03 489 A1 offenbart. Die digitale Kompensation verwendet einen Algorithmus, der es ermöglicht, einen aufgrund einer Temperaturänderung auftretenden Messfehler am Druckmessgerät rechnerisch zu beseitigen. Ein bekannter Algorithmus basiert beispielsweise auf der Methode der kleinsten Fehlerquadrate bzw. der linearen Progression.

Angewendet wird auch folgender Algorithmus: Anhand des Vergleichs der über die Messbrücke bereitgestellten Messwerte mit den entsprechenden Referenzwerten werden über ein mathematisches Modell mit einem Gleichungssystem n-ter Ordnung die Koeffizienten zur Minimierung der Kennlinien- und Temperaturfehler bestimmt. Die Koeffizienten werden anschließend in einem der Druckmesszelle bzw. dem Drucksensor zugeordneten Sensorelektronik abgelegt. Alternativ hierzu kann auch ein Raster von Stützstellen abgespeichert werden, wobei zwischen diesen Stützstellen eine Interpolationsrechnung durchgeführt wird. Die Koeffizienten werden ebenfalls in einem Speicher der Sensorelektronik abgelegt.

Die zuvor beschriebenen Methoden zur Kompensation des Temperatureffekts bei Druckmessgeräten ist nicht in allen Applikationen unproblematisch: So erfolgt z.B. die Kennlinienprüfung zur Ermittlung der temperaturabhängigen Korrekturwerte stets zu einem Zeitpunkt, wenn die Druckmesszelle 'durchgewärmt' ist, wenn sich also alle mechanischen Komponenten der Druckmesszelle, insbesondere der Gehäuse-Grundkörper, die Messflansche und das Druckübertragungsmedium, nach einer sprunghaften Temperaturänderung in einem 'eingeschwungenen' stationären Zustand und somit auf derselben konstanten Temperatur befinden.

Diese Methoden werden nicht allen in der Praxis auftretenden Messsituationen gerecht: So wird bei einem Druckmessgerät die Temperatur beispielsweise an dem Messelement bestimmt, welches - wie bereits zuvor erwähnt - in vielen Fällen integraler Teil eines Chips' ist, der mit der Messmembran in Kontakt ist. In vielen Fällen ist die Messmembran durch zumindest einen Druckmittler von dem Messmedium abgesetzt. Bekannte Kompensationsmodelle kompensieren den Temperatureinfluss dennoch auf der Grundlage der an dem Messelement erfassten Temperatur. Mitunter wird hierdurch ein relativ großer Messfehler verursacht

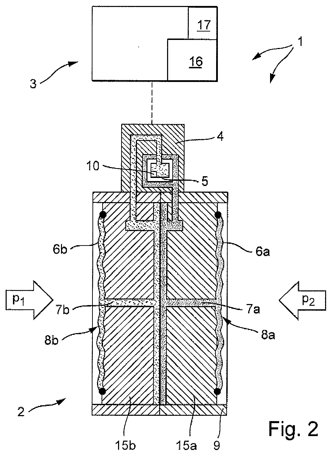

Die Problematik, die sich aus dieser Vorgehensweise ergeben kann, wird durch das nachfolgende Beispiel klar: Ändert sich die Umgebungstemperatur sprunghaft, so ändert sich die Temperatur der Druckmesszelle integral wesentlich langsamer als die an dem Messelement aktuell gemessene Temperatur. Dies zeigt sich insbesondere dann, wenn der Chip mit dem integrierten Temperaturfühler außerhalb des eigentlichen Gehäuses der Druckmesszelle bzw. des massiven Messwerkblocks angeordnet ist, wie dies bei der in Fig. 2 schematisch dargestellten Druckmesszelle der Fall ist.

Ändert sich die Umgebungstemperatur nun beispielsweise von 20° C auf 70° C, so wird der Temperaturfühler an dem Messelement bzw. an dem Chip relativ schnell die 70° C anzeigen, die in der Umgebung herrschen. Hingegen erreichen die mechanischen Komponenten der Druckmesszelle diese Temperatur erst nach einer wesentlich längeren Zeit, nämlich dann, wenn die Druckmesszelle 'durchgewärmt' ist. Kommt die bekannte Kompensationsmethode zum Einsatz, so wird über einen Zeitraum von annähernd zwei Stunden die Temperaturkompensation auf der Basis eines effektiv zu hohen Temperatur-wertes durchgeführt. Als Folge hiervon liefert das Druckmessgerät während dieser Zeitspanne einen mit einem relativ großen Messfehler behafteten Druckmesswert.

Weitere in der Praxis auftretende problematische Anwendungsfälle sind nachfolgend exemplarisch aufgeführt:
Fall 1: Bei einem Relativ-, Absolut- oder Differenz-Druckmessgerät tritt eine Änderung, insbesondere eine sprunghafte Änderung in der Umgebungstemperatur auf.
   In diesem Fall ändert sich vorwiegend die Temperatur des Messumformers, der die elektronischen Komponenten des Druckmessgeräts enthält. Beispiele für diesen Fall sind Temperaturänderungen infolge von wechselnder Sonneneinstrahlung oder infolge der Bewegung eines Flugkörpers. Großen Einfluss hat darüber hinaus auch der Einbau des Druckmessgeräts in der Nähe des Messmediums, wenn dieses temporär z.B. der Strahlungswärme bei geöffneten Feuerungsklappen oder beim Metallabstich in Gießereien ausgesetzt ist.
Fall 2: Bei einem Differenz-Druckmessgerät ändert sich die Temperatur bei einer sprunghaften Änderung der Temperatur des Messmediums in beiden Druckmesskammern nahezu gleichzeitig. Beispiele für diesen Fall sind Füllstandsmessungen an Behältern mit veränderlicher Temperatur des Messmediums, z.B. das Befüllen eines sich auf Raumtemperatur befindlichen Behälters mit einer heißen Flüssigkeit. Diese Situation kann u.a. im Rahmen von Reinigungszyklen oder bei Blendenmessungen mit Messmedien mit veränderlicher Temperatur auftreten.
Fall 3: Bei einem Relativ-, Absolut- oder Differenz-Druckmessgerät ändert sich die Temperatur des Messmediums einseitig. Beispiel hierfür ist die Füllstandsmessung in einem Behälter mit einem einseitigem Flanschanbau - hier ist also die Referenzseite offen. Diese Situation kann beispielsweise bei der Druckmessung in einem offenen Behälter gegeben sein.

Die Offenlegungsschrift US 2005/0000290 A1 offenbart ein Verfahren zur Korrektur von Temperatureinflüssen auf einen Drucksensor, wobei die zeitliche Ableitung der gemessenen Temperatur als Basis für die Korrektur herangezogen wird.

Der Erfindung liegt die Aufgabe zugrunde, die Messgenauigkeit eines Druckmessgeräts zu verbessern. Insbesondere soll die Messgenauigkeit in Zeitbereichen verbessert werden, wenn die Druckmesszelle relativ großen sprunghaften Temperaturänderungen ausgesetzt ist.

Die Aufgabe wird dadurch gelöst, dass die Regel-/Auswerteeinheit im Falle einer sprunghaften Änderung der vom Temperaturfühler erfassten Temperatur eine Sprungantwort ermittelt bzw. bereitstellt, wobei die Sprungantwort eine Sensor- oder Sensortyp-spezifische Einschwingzeit aufweist, und dass die Regel-/Auswerteeinheit anhand der ermittelten bzw. bereitgestellten Sprungantwort die entsprechende zeitabhängige integrale Temperatur der Druckmesszelle heranzieht, um den Temperatureinfluss auf das von dem Messelement bereitgestellt Druckmesssignal zu eliminieren bzw. zu kompensieren.

Gemäß einer vorteilhaften Ausgestaltung erkennt die Regel-/Auswerteeinheit eine sprunghafte Änderung der Temperatur, wenn die Sensor- oder Sensortyp-spezifische Einschwingzeit der Druckmesszelle größer ist als die zeitliche Änderung der vom Temperaturfühler gemessenen Temperatur. Sobald diese Bedingung erfüllt ist, setzt der erfindungsgemäße Korrekturalgorithmus ein.

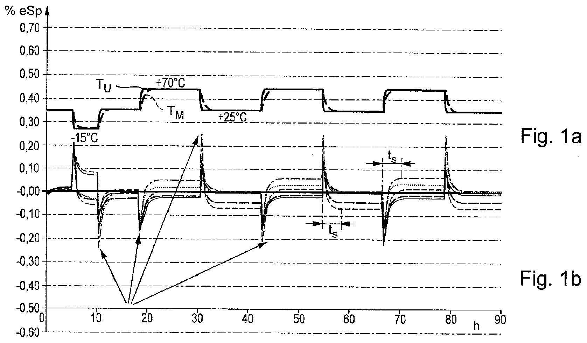

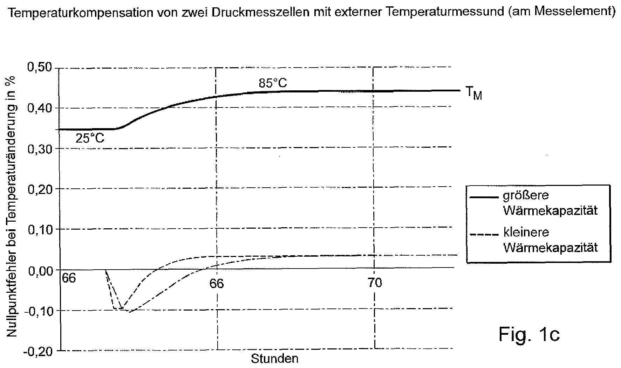

Die Korrektur selbst kann auf unterschiedliche Arten durchgeführt werden: In einer ersten Ausgestaltung ist eine Speichereinheit vorgesehen, in der in Form von Koeffizienten oder empirisch ermittelten Messkurven Sprungantworten auf unterschiedliche sprunghafte Änderungen der vom Temperaturfühler erfassten Temperatur abgespeichert sind. Bevorzugt werden die Sprungantworten, die den für die jeweilige Druckmesszelle bzw. für den jeweiligen Typ von Druckmesszelle typischen Erwärmungsverlauf wiedergeben, in einem Temperaturwechselschrank ermittelt. Eine praktikable Vorgehensweise sieht vor, dass der Temperaturwechselschrank auf eine vorgegebene maximale Temperatur aufgeheizt wird; die Druckmesszelle wird elektrisch angeschlossen und in dem Schrank positioniert. Anhand des von dem Messelement gelieferten Druckmesssignals und des von dem Temperaturfühler erfassten Temperaturverlaufs kann so einfach und präzise das typische Temperaturverhalten der Druckmesszelle als Reaktion auf eine sprunghafte Änderung der Umgebungstemperatur ermittelt werden, so dass im späteren Messbetrieb eine entsprechend angepasste Kompensation bzw. Elimination des Temperatureinflusses Sensor- bzw. Sensortyp-spezifisch durchgeführt werden kann. In der Fig. 1 sind entsprechende Sprungantworten beispielhaft dargestellt.

Alternativ ist vorgesehen, dass die Regel-/Auswerteeinheit die Sprungantwort bzw. den typischen Verlauf der Temperatur der Druckmesszelle auf eine sprunghafte Temperaturänderung in der Umgebung der Druckmesszelle in Abhängigkeit von der Wärmeleitfähigkeit und der Wärmekapazität der mechanischen Komponenten der Druckmesszelle rechnerisch ermittelt. Insbesondere wird hierzu eine FEM-Simulation verwendet.

Bei dem Drucksensor handelt es sich beispielsweise um einen Differenzdrucksensor mit einem beiseitigen Druckmittler und mit beidseitig angeordneten Trennmembranen, oder es handelt sich bei dem Drucksensor um einen Relativ- oder Absolutdrucksensor mit einem Druckmittler. Druckmittler werden eingesetzt, um eine Entkopplung des empfindlichen Messelements von dem u.U. aggressiven oder korrosiven Messmedium zu erreichen. Bevorzugt handelt es sich bei dem ein- oder beidseitigen Druckmittler um einen hydraulischen Druckmittler, weil hierdurch eine hochgenaue Übertragung des Drucks des Messmediums auf das Messelement möglich ist. Als Druckübertragungsmedium wird bevorzugt Silikonöl eingesetzt.

Kommt das erfindungsgemäße Druckmessgerät bei Anwendungsfällen zum Einsatz, bei denen das Messmedium selbst die sprunghaften Temperaturänderungen aufweist, so hat es sich als sinnvoll erwiesen, zumindest einen zweiten Temperaturfühler vorzusehen, der so angeordnet und/oder ausgestaltet ist, dass er im wesentlichen Information über die Temperatur des Messmediums bereitstellt. Handelt es sich bei der Druckmesszelle um einen Differenzdrucksensor, so ist es zur Erfassung der Temperatur des Messmediums vorteilhaft, jeweils einen Temperatursensor im Bereich der beiden Trennmembranen vorzusehen. Alternativ kann auch nur ein zusätzlicher Temperaturfühler vorgesehen sein, der möglichst zentral in der Druckmesszelle positioniert ist und somit Information über die die integrale Temperatur der Druckmesszelle liefert.

Gemäß einer vorteilhaften Weiterbildung des erfindungsgemäßen Druckmessgeräts ermittelt die Regel-/Auswerteeinheit die Sprungantwort der Druckmesszelle auf eine sprunghafte Temperaturänderung anhand eines Modells der Durchwärmung der Druckmesszelle in Abhängigkeit von der Temperatur des Messmediums und von der im Bereich der Druckmesszelle herrschenden Temperatur. Hierdurch lässt sich die Reaktion der Druckmesszelle auf jegliche Art von Temperaturänderung hochgenau bestimmen, so dass das Druckmessgerät unter beliebigen Umgebungsbedingungen einen in hohem Maße genauen Druckmesswert bereitstellt.

Die Erfindung wird anhand der nachfolgenden Figuren näher erläutert. Es zeigt:
Fig. 1 a: grafische Darstellungen von Sprungantworten, die den Temperaturverlauf einer Druckmesszelle in Reaktion auf eine sprunghafte Änderung der Umgebungstemperatur der Druckmesszelle zeigen,
Fig. 1b: Darstellungen von Druckmessfehlern, die aus fehlerhaften Temperaturwerten der Druckmesszelle nach einer sprunghaften Änderung der Umgebungstemperatur resultieren,
Fig. 1 c: eine grafische Darstellung zur Verdeutlich der erfindungsgemäßen Temperaturkompensation zweier unterschiedlicher Druckmesszellen bei externer Temperaturmessung,
Fig. 2: eine erste Ausführungsform eines erfindungsgemäßen Druckmessgeräts, bei dem der Temperaturfühler der Druckmesszelle zugeordnet ist, und
Fig. 3: eine zweite Ausführungsform eines erfindungsgemäßen Druckmessgeräts, bei dem unterschiedliche Positionierungsmöglichkeiten von Temperaturfühlern zur Ermittlung der Temperatur der Druckmesszelle schematisch dargestellt sind.

Im oberen Bereich der Fig. 1 - in Fig. 1a - ist eine grafische Darstellung der Umgebungstemperatur *T_{U}* und der im Bereich des Messelements 5 gemessenen Temperatur unterschiedlicher Druckmesszellen 4 in Reaktion zu sehen. Die am Messelement 5 gemessene Temperatur *T_{M}* folgt zeitnah der Änderung der Umgebungstemperatur *T_{U}*. Während die Umgebungstemperatur *T_{U}* bzw. die am Messelement 5 gemessene Temperatur *T_{M}* einen nahezu rechteckförmigen Verlauf aufweist, folgt die Temperatur *T_{D}* der Druckmesszelle 4 den sprunghaften Änderungen der Umgebungstemperatur *T_{U}* verzögert: die Gleichgewichtstemperatur *T_{D}* der Druckmesszelle 4 'hinkt' der Umgebungstemperatur *T_{U}* zeitlich hinterher.

Im unteren Bereich der Fig. 1 - in Fig. 1b - sind mehrere unterschiedliche sensortyp-spezifische Kurven dargestellt, die die Fehlkompensationen verdeutlichen, welche auftreten, wenn die Druckmesswerte eines Drucksensors 2 auf der Grundlage der in der Umgebung der Druckmesszelle 4 bzw. des Drucksensors 2 herrschenden Temperatur korrigiert werden. Dargestellt ist jeweils der sog. Nullpunktfehler in Prozent. Erfolgt die Korrektur unter der Annahme, dass die Temperaturänderung der Druckmesszelle 4 und die entsprechende Änderung der Temperatur des Messmediums 14 bzw. der Umgebung zeitlich parallel zueinander verlaufen, so tritt nach einem erfolgten Temperatursprung eine große Abweichung und damit ein großer Messfehler bei der Druckmessung auf. Die auftretenden maximalen Fehlkompensationen sind in der Fig. 1b mit Pfeilen markiert. Erst nach Ablauf der Sensor- bzw. Sensortyp-spezifischen Einschwingzeit *t_{S}* wird ein Zustand erreicht, in dem die integrale Temperatur der Druckmesszelle 4 und die Umgebungs- und/oder Mediumstemperatur im Gleichgewicht sind.

Erfindungsgemäß wird diese Fehlkompensation verhindert: Im Falle einer sprunghaften Änderung der vom Temperaturfühler 10; 11; 12; 13 erfassten Temperatur ermittelt die Regel-/Auswerteeinheit 16 eine entsprechende Sprungantwort der Druckmesszelle 4 bzw. sie stellt sie über eine Simulationsmodell bereit. Die Einschwingzeit *t_{S}* ist Sensor- bzw. Sensortyp-spezifisch. Anhand der experimentell oder über ein Simulationsmodell ermittelten Sprungantwort des Drucksensors 2 bzw. der Druckmesszelle 4 auf Temperatursprünge in der Umgebung des Drucksensors 2 oder der Druckmesszelle 4 steht der Regel-/Auswerteeinheit 16 zu jeder Zeit die tatsächliche, integrale Temperatur der Druckmesszelle 4 für die Temperaturkompensation zur Verfügung. Hierdurch lässt sich der Temperatureinfluss auf das von dem Messelement 5 bereitgestellte Druckmesssignal hochgenau kompensieren bzw. und in guter Näherung eliminieren.

In Fig. 1c ist eine grafische Darstellung zur Verdeutlichung der erfindungsgemäßen Temperaturkompensation im Falle zweier unterschiedlicher Druckmesszellen 4 bei externer Temperaturmessung zu sehen. Die am Messelement 5 gemessene Temperatur *T_{M}* ändert sich in Reaktion auf eine sprunghafte Änderung in der Umgebungstemperatur relativ schnell von 25°C auf 85°C. Der entsprechende Graph ist im oberen Bereich der Fig. 1c dargstellt.

Die durchgezogene Linie im unteren Bereich von Fig. 1c zeigt den Nullpunktfehler, der bei einer Druckmesszelle 4 auftritt, die eine relativ große Wärmekapazität und eine relativ geringe Wärmeleitfähigkeit hat; die gleichfalls im unteren Bereich dargestellte gestrichelte Linie zeigt den Nullpunktfehler, der bei einer Druckmesszelle 4 bzw. einem Typ einer Druckmesszelle 4 auftritt, die eine relativ kleine Wärmekapazität und eine relativ große Wärmeleitfähigkeit besitzt. Diese sensor- oder sensortyp-spezifischen Fehlkompensationen des Standes der Technik werden mittels der Erfindung eliminiert, so dass auch im Übergangsbereich eine Temperaturkompensation auf der Basis der tatsächlichen Temperatur der Druckmesszelle erfolgt.

Fig. 2 zeigt eine erste Ausführungsform des erfindungsgemäßen Druckmessgeräts 1, bei dem der Temperaturfühler 10 der Druckmesszelle 4 zugeordnet ist. Insbesondere ist hier das Messelement 5 außerhalb der Messflansche 15a, 15 und der Druckmittler 6a, 7a, 8a, 6b, 7b, 8b angeordnet. Kommt es zu einer sprunghaften Erwärmung oder Abkühlung in der Umgebung der Druckmesszelle 4, so wird der Temperaturfühler 10 relativ schnell (siehe Fig. 1a) diese Temperaturänderung detektieren. Aufgrund der 'Trägheit" der mechanischen und hydraulischen Komponenten erreicht der Drucksensor 2 die von dem Temperaturfühler 10 bereitgestellte Umgebungstemperatur zeitverzögert nach Ablauf der Einschwingzeit *t_{S}*.

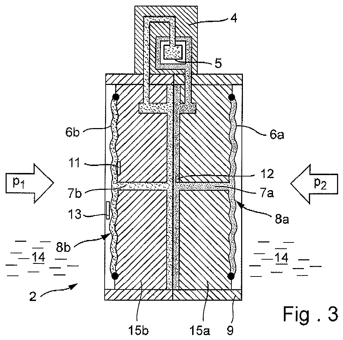

In Fig. 3 sind weitere Ausführungsformen des erfindungsgemäßen Druckmessgeräts1 dargestellt. Diese Ausführungsformen unterscheiden in der Anordnung des Temperaturfühlers 11; 12; 13. Grundsätzlich kann gesagt werden, dass die Positionierung ebenso wie die Anzahl der eingesetzten Temperaturfühler 10; 11; 12; 13 von dem Sensortyp und dem Einbauort sowie der Einbauart in dem Druckmessgerät 1 abhängig ist. Beispielsweise ist der Temperaturfühler 11 unterhalb der Trennmembran 6b angeordnet und erfasst sehr schnell eine Änderung der Temperatur des Messmediums 14. Als besonders günstig ist es in diesem Zusammenhang, wenn die Trennmembran 6b als Ringmembran ausgestaltet ist. Eine entsprechende Ringmembran ist in der nicht vorveröffentlichten DE 10 2005 035 931.0 der Anmelderin beschrieben. Diese Ringmembran ist Teil des Offenbarungsgehalt der vorliegenden Anmeldung.

Hingegen ist der Temperaturfühler 12 näherungsweise im Zentrum des Drucksensors 2 angeordnet. Durch diese Anordnung lässt sich die integrale Temperatur des Drucksensors 2 zumindest angenähert erfassen. Darüber hinaus ist der Temperaturfühler 13 ist im Messflansch 15b angeordnet.

Für hochgenaue Messungen mag es sinnvoll sein, beispielsweise zwei Temperatursensoren 10,11; 10, 12; 10,13 zu verwenden und die aktuelle integrale Temperatur des Drucksensors 2 über ein Simulationsmodell hochgenau zu bestimmen.

### Bezugszeichenliste

1 Druckmessgerät
2 Drucksensor
3 Transmitter / Messumformer
4 Druckmesszelle
5 Messelement
6a Trennmembran
6b Trennmembran
7a Druckmittlermedium
7b Druckmittlermedium
8a Messkammer
8b Meßkammer
9 Gehäuse
10 erster Temperaturfühler
11 zweiter Temperaturfühler
12 dritter Temperaturfühler
13 vierter Temperaturfühler
14 Messmedium
15a Messflansch
15b Messflansch
16 Regel-/Auswerteeinheit
17 Speichereinheit

## Patentansprüche

1. Druckmessgerät (1) zur Messung und/oder Überwachung des Drucks eines Messmediums (14) mit einem Sensorgehäuse (9) und einem Messumformer (3), wobei dem Sensorgehäuse (9) eine Druckmesszelle (4) mit einem drucksensitiven Messelement (5) zugeordnet ist, wobei der Druckmesszelle (4) ein Temperaturfühler (10; 11; 12; 13) zugeordnet ist, und wobei dem Messumformer (3) eine Regel-/Auswerteeinheit (16) zugeordnet ist,
**dadurch gekennzeichnet,**
**dass** die Regel-/Auswerteeinheit (16) ausgebildet ist, im Falle einer sprunghaften Änderung der vom Temperaturfühler (10; 11; 12; 13) erfassten Temperatur eine Sprungantwort zu ermitteln bzw. bereitzustellen, wobei die Sprungantwort eine Sensor- oder Sensortyp-spezifische Einschwingzeit (tₛ) aufweist, und nach Ablauf der Sensor- bzw. Sensortyp-spezifischen Einschwingzeit *t_{S}* ein Zustand erreicht wird, in dem die integrale Temperatur der Druckmesszelle (4) und die Umgebungs- und/oder Mediumstemperatur im Gleichgewicht sind, und
**dass** die Regel-/Auswerteeinheit (16) ausgebildet ist, anhand der ermittelten bzw. bereitgestellten Sprungantwort die entsprechende zeitabhängige integrale Temperatur der Druckmesszelle (4) heranzuziehen, um den Temperatureinfluss auf das von dem Messelement (5) bereitgestellte Druckmesssignal zu eliminieren bzw. zu kompensieren.

2. Vorrichtung nach Anspruch 1,
**dadurch gekenntzeichnet,**
dass die Regel-/Auswerteeinheit (16) ausgebildet ist zum Erkennen einer sprunghaften Änderung der Temperatur, wenn die Sensor- oder Sensortyp-spezifische Einschwingzeit (tₛ) der Druckmesszelle (4) größer ist als die zeitliche Änderung der vom Temperaturfühler (10; 11; 12; 13) gemessenen Temperatur.

3. Vorrichtung nach Anspruch 1 oder 2,
**dadurch gekennzeichnet,**
**dass** eine Speichereinheit (17) vorgesehen ist, in der in Form von Koeffizienten oder empirisch ermittelten Messkurven Sprungantworten auf unterschiedliche sprunghafte Änderungen der vom Temperaturfühler (10; 11; 12; 13) erfassten Temperatur abgespeichert sind.

4. Vorrichtung nach Anspruch 1 oder 2,
**dadurch gekennzeichnet,**
**dass** die Regel-/Auswerteeinheit (16) ausgebildet ist zum rechnerischen Ermitteln der Sprungantwort in Abhängigkeit von der Wärmeleitfähigkeit und der Wärmekapazität der mechanischen Komponenten der Druckmesszelle (4).

5. Vorrichtung nach Anspruch 4,
**dadurch gekennzeichnet,**
**dass** die Regel-/Auswerteeinheit (16) zur Bestimmung der Sprungantwort eine FEM-Simulation verwendet.

6. Vorrichtung nach Anspruch 1,
**dadurch gekennzeichnet,**
**dass** es sich bei dem Drucksensor (2) um einen Differenzdrucksensor mit einem beiseitigen Druckmittler (7a, 8a; 7b, 8b) mit beidseitig angeordneten Trennmembranen (6a, 6b) handelt.

7. Vorrichtung nach Anspruch 1,
**dadurch gekennzeichnet,**
**dass** es sich bei dem Drucksensor (2) um einen Relativ- oder Absolutdrucksensor mit einem Druckmittler (7, 8) und einer Trennmembran (6) handelt.

8. Vorrichtung nach Anspruch 6 oder 7,
**dadurch gekennzeichnet,**
**dass** es sich bei dem Druckmittler (7, 8) um jeweils einen hydraulischen Druckmittler (7, 8) handelt.

9. Vorrichtung nach Anspruch 1 oder 7,
**dadurch gekennzeichnet,**
**dass** der Temperaturfühler (10; 11; 12; 13) auf dem Messelement (5) angeordnet ist.

10. Vorrichtung nach Anspruch 6 oder 8,
**dadurch gekennzeichnet,**
**dass** zumindest ein zweiter Temperaturfühler (11; 12; 13) vorgesehen ist, der so angeordnet und/oder ausgestaltet ist, dass er im wesentlichen die die Temperatur des Messmediums (14) bestimmt.

11. Vorrichtung nach Anspruch 10,
**dadurch gekennzeichnet,**
**dass** die Regel-/Auswerteeinheit (16) ausgebildet ist, die Sprungantwort der Druckmesszelle (4) auf eine sprunghafte Temperaturänderung anhand eines Modells der Durchwärmung der Druckmesszelle (4) in Abhängigkeit von der Temperatur des Messmediums (14) und von der im Bereich der Druckmesszelle (4) herrschenden Temperatur zu ermitteln.

## Claims

1. Pressure measuring device (1) for measuring and/or monitoring the pressure of a medium (14), with a sensor housing (9) and a transmitter (3), wherein a pressure measuring cell (4) with a pressure-sensitive measuring element (5) is assigned to the sensor housing (9), wherein a temperature sensor (10, 11, 12, 13) is assigned to the pressure measuring cell (4), and wherein a control/evaluation unit (16) is assigned to the transmitter (3),
**characterized in that**
the control/evaluation unit (16) is designed to determine or provide a step response in the event of an erratic change in the temperature recorded by the temperature sensor (10, 11, 12, 13), wherein the step response has a settling time (tₛ), which is specific to the sensor or sensor type, and wherein, after expiry of the sensor-specific or sensor type-specific settling time (tₛ) a state is reached in which the integral temperature of the pressure measuring cell (4) and the ambient and/or medium temperature are in equilibrium, and
**in that**, using the step response determined or provided, the control/evaluation unit (16) is designed to apply the corresponding time-dependent integral temperature of the pressure measuring cell (4) in order to eliminate or compensate for the temperature influence on the pressure measuring signal provided by the measuring element (5).

2. Apparatus as claimed in Claim 1,
**characterized in that**
the control/evaluation unit (16) is designed to detect an erratic change in the temperature if the sensor-specific or sensor type-specific settling time (tₛ) of the pressure measuring cell (4) is greater than the change over time of the temperature measured by the temperature sensor (10, 11, 12, 13).

3. Apparatus as claimed in Claim 1 or 2,
**characterized in that**
a memory unit (17) is provided in which step responses to different erratic changes in the temperature recorded by the temperature sensor (10, 11, 12, 13) are saved in the form of coefficients or measuring curves obtained by empirical means.

4. Apparatus as claimed in Claim 1 or 2,
**characterized in that**
the control/evaluation unit (16) is designed to determine by calculation the step response as a function of the thermal conductivity and the thermal capacity of the mechanical components of the pressure measuring cell (4).

5. Apparatus as claimed in Claim 4,
**characterized in that**
the control/evaluation unit (16) uses an FEM simulation to determine the step response.

6. Apparatus as claimed in Claim 1,
**characterized in that**
the pressure sensor (1) is a differential pressure sensor with a diaphragm seal (7a, 8a, 7b, 8b) on both sides with process isolating diaphragms (6a, 6b) arranged on both sides.

7. Apparatus as claimed in Claim 1,
**characterized in that**
the pressure sensor (2) is a relative or absolute pressure sensor with a diaphragm seal (7, 8) and a process isolating diaphragm (6).

8. Apparatus as claimed in Claim 6 or 7,
**characterized in that**
in each case the diaphragm seal (7, 8) is a hydraulic diaphragm seal (7, 8).

9. Apparatus as claimed in Claim 1 or 7,
**characterized in that**
the temperature sensor (10, 11, 12, 13) is arranged on the measuring element (5).

10. Apparatus as claimed in Claim 6 or 8,
**characterized in that**
at least a second temperature sensor (11, 12, 13) is provided that is arranged and/or designed in such a way that it essentially determines the temperature of the medium (14).

11. Apparatus as claimed in Claim 10,
**characterized in that**
the control/evaluation unit (16) is designed to determine the step response of the pressure measuring cell (4) to an erratic change in the temperature using a mode of heating the pressure measuring cell (4) depending on the temperature of the medium (14) and on the temperature present in the area of the pressure measuring cell (4).

## Revendications

1. Capteur de pression (1) destiné à la mesure et/ou la surveillance de la pression d'un produit (14), doté d'un boîtier de capteur (9) et d'un transmetteur (3), une cellule de mesure de pression (4) étant attribuée au boîtier de capteur (9), laquelle cellule comporte un élément de mesure (5) sensible à la pression, une sonde de température (10, 11, 12, 13) étant attribuée à la cellule de mesure de pression (4), et une unité de régulation / d'exploitation (16) étant attribuée au transmetteur (3),
**caractérisé**
**en ce que** l'unité de régulation / d'exploitation (16) est conçue de telle sorte, dans le cas d'une modification brusque de la température mesurée par la sonde de température (10, 11, 12, 13), à pouvoir déterminer ou mettre à disposition une réponse transitoire, la réponse transitoire présentant un temps de montée (tₛ) spécifique au capteur ou au type de capteur, et en ce que, après l'écoulement du temps de montée (tₛ) spécifique au capteur ou au type de capteur, est atteint un état dans lequel la température intégrale de la cellule de mesure de pression (4) et la température ambiante et/ou du produit sont en équilibre, et
**en ce que** l'unité de régulation / d'exploitation (16) est conçue de telle manière à utiliser la température intégrale correspondante, fonction du temps, de la cellule de mesure de pression (4), sur la base de la réponse transitoire déterminée ou mise à disposition, de telle manière à éliminer ou compenser l'influence de la température sur le signal de mesure de pression mis à disposition par l'élément de mesure (5).

2. Dispositif selon la revendication 1,
**caractérisé**
**en ce que** l'unité de régulation / d'exploitation (16) est conçue de telle sorte à détecter une modification brusque de la température lorsque le temps de montée (tₛ) spécifique au capteur ou au type de capteur de la cellule de mesure de pression (4) est supérieur à la variation dans le temps de la température mesurée par la sonde de température (10, 11, 12, 13).

3. Dispositif selon la revendication 1 ou 2,
**caractérisé**
**en ce qu'**est prévue une unité de mémoire (17), dans laquelle sont enregistrées des réponses transitoires - sous la forme de courbes de mesure déterminées au moyen de coefficients ou de façon empirique - à différentes modifications brusques de la température mesurée par la sonde de température (10, 11, 12, 13).

4. Dispositif selon la revendication 1 ou 2,
**caractérisé**
**en ce que** l'unité de régulation / d'exploitation (16) est conçue de telle manière à déterminer par calcul la réponse transitoire en fonction de la conductibilité thermique et de la capacité thermique des composants mécaniques de la cellule de mesure de pression (4).

5. Dispositif selon la revendication 4,
**caractérisé**
**en ce que** l'unité de régulation / d'exploitation (16) utilise une simulation FEM pour la détermination de la réponse transitoire.

6. Dispositif selon la revendication 1,
**caractérisé**
**en ce que** concernant le capteur de pression (1), il s'agit d'un capteur de pression différentielle avec un séparateur (7a, 8a, 7b, 8b) de part et d'autre, avec des membranes de séparation (6a, 6b) disposées des deux côtés.

7. Dispositif selon la revendication 1,
**caractérisé**
**en ce que** concernant le capteur de pression (2), il s'agit d'un capteur de pression relative ou absolue avec un séparateur (7, 8) et une membrane de séparation (6).

8. Dispositif selon la revendication 6 ou 7,
**caractérisé**
**en ce que** concernant le séparateur (7, 8), il s'agit d'un séparateur hydraulique (7, 8).

9. Dispositif selon la revendication 1 ou 7,
**caractérisé**
**en ce que** la sonde de température (10, 11, 12, 13) est disposée sur l'élément de mesure (5).

10. Dispositif selon la revendication 6 ou 8,
**caractérisé**
**en ce qu'**est prévue au moins une deuxième sonde de température (11, 12, 13), qui est disposée et/ou conçue de telle sorte qu'elle détermine pour l'essentiel la température du produit mesuré (14).

11. Dispositif selon la revendication 10,
**caractérisé**
**en ce que** l'unité de régulation / d'exploitation (16) est conçue de telle sorte à déterminer la réponse transitoire de la cellule de mesure de pression (4) à une modification brusque de la température au moyen d'un modèle d'échauffement de la cellule de mesure de pression (4) en fonction de la température du produit mesuré (14) et de la température régnant dans la zone de la cellule de mesure de pression (4).
